# EUROPEAN PATENT APPLICATION

(11) **EP 2 821 940 A1**
(43) Date of publication of application: **07.01.2015**
(21) Application number: 13174894.9
(22) Date of filing: 03.07.2013
(51) Int. Cl.: G06K 19/02

(54) **Binary labeling**

(71) Applicant: Lumiprobe GmbH, 30625 Hannover (DE)
(72) Inventor: Topolyan, Artem P., 30625 Hannover (DE); Brylev, Vladimir A., 30625 Hannover (DE); Korshun, Vladimir A., 30625 Hannover (DE); Ustinov, Alexey V., 30625 Hannover (DE)
(74) Representative: Kröncke, Rolf

(57) **Abstract**

The present invention relates to a method for allocating information about an object. Moreover, the present invention relates to a method for labeling an object for example a method for tracking or identifying an object containing a predetermined information. In addition, a method for providing a security feature to an object is provided as well as a kit for enabling the same. That is, the present invention relates to a method wherein an information about an object is converted into a binary code and said binary code is assigned to a set of compounds having specific peaks in a mass spectrum when measured by mass spectrometry analysis of said set of compounds.

## Description

The present invention relates to a method for allocating information about an object. Moreover, the present invention relates to a method for labeling an object for example a method for tracking or identifying an object containing a predetermined information. In addition, a method for providing a security feature to an object is provided as well as a kit for enabling the same. That is, the present invention relates to a method wherein an information about an object is converted into a binary code and said binary code is assigned to a set of compounds having specific peaks in a mass spectrum when measured by mass spectrometry analysis of said set of compounds.

### Background of the invention

Covered labeling of materials and surfaces is useful for the protection of various products from unauthorized distribution and counterfeiting. Since the 13^{th} century, macroscopic methods, like watermarks and other types of security means, are well known and used. Microscopic methods using physical or chemical properties of materials to conceal hidden information represents an active research field nowadays.

Until today labeling and protection of compounds in compositions in volume is a complicated and yet unsolved task. For example, in the pharmaceutical industry, high demands for such methods is given and required because of immense expansion of drug counterfeit, e.g. Degadine, K. et al., J. Pharmaceutical and Biomed. Analysis, 2013, doi 10.1016/J.jpba.2013.01.009. While original packaging can be easily imitated by fake manufacturers using current printing technologies to conceal product origin, methods allowing identification of authenticity of every single tablet or other drug sample could provide unambiguous identification of counterfeit, as well as forensic evidence.

Some approaches are described for in volume labeling of chemical materials including pharmaceuticals. For example, in WO 2005/031302 a method is disclosed which should allow drug authentication. The method described therein is based on near infrared (NIR) spectra to encode information about drug batches. The method relates to labeling by varying an amount of at least one of the one or more inactive ingredients present in the pharmaceutical product over time and generating a product signature of the pharmaceutical product having the right amount of the at least one of the one or more inactive ingredients whereby measurement is conducted by near infrared spectrometry.

Variations of the near infrared spectra have been achieved by a change in concentration of the inactive components of the drug. However, this method possesses significant limitations. Variations of concentrations of inactive components cannot be used to achieve arbitrary appearance of the spectra because each component possesses a number of broad absorption bands. Therefore, only few fragments of information can be encoded by this way. Another limiting issue is a need to make significant changes to drug compositions to obtain measurable variations of any absorption spectra. Obviously, this is not compatible with highly standardized manufacture of medicine and in view of the requirements of approval for marketing of medicinal products in various states.

Near infrared labeling of surfaces has been demonstrated with metal organic frameworks containing Lanthanides, as described e.g. in White, K.A., J. An. Chem. Soc., 2009, 131 (15), 18069-18071. Different metal organic frameworks produced distinct NIR emission spectra, but not many variations can be produced this way. In the publication identified above, the authors admit that emission profiles are difficult to control.

In US 8,268,623 inorganic ions are proposed as additives to pharmaceuticals enabling detection of counterfeit items. For example, cosmetic products or pharmaceutical products may be incorporated as a marketing composition using inorganic cation or anions.

This approach has its advantage because no artificial components need to be introduced to a drug or perfume. However, sample to be labelled can itself contain high concentrations of some of the ions used for the encoding, especially alkaline metal cations and anions like chloride and sulphate. Some other ions may be toxic to humans, like selenate or zink. Therefore, besides only about 20 bits of information can be theoretically encoded this way, not all of these bits can be useful, limiting number of variations encoded by enable to small number. In US patent US 8,071,386, stemming from the same parent application, depletion of ions instead of the enrichment is described. Shortcomings of this method are even more pronounced because drug samples are not generally expected to contain a large number of ions which can be depleted of.

Other possibilities are described in the art proposing optical methods for the labeling of petroleum products. However, these methods provide too little information entropy to encode useful message in-label because of broadness of UV-vis absorption and emission bands. Presence or absence of fluorescence in some region (channel) of emission spectrum of a sample corresponds to only one bit of information. Optical methods, e.g. fluorescence, provide low information density because fluorescence channels are broad and limited number of them can be put into UV-vis in the NIR spectral window to avoid inter-channel cross talk. This remarkably limits information entropy being encoded by fluorescence to the available channels. That is, about 8 channels are available which can be put into UV-vis in a spectral window limiting the information drastically. Non-multiplex labeling of petroleum products have been demonstrated with 920 dyes, US-patent 5,156,653, coumarin fluorophores, US-patent 5,980,593, cyanine near infrared dyes, US-patent 5,525,516 as well as various other NIR absorbing emitting dyes exemplied in US patent 5,998,211.

Mass spectrometry has a great advantage in information entropy encoded in mass spectrum. The amount of information encoded in mass spectrum is orders of magnitude higher than for other analytical methods. Mass spectrometry has been long ago proposed for multiplex disease detection, e.g. Petricoin, E.F., et al., Clin. Chem., 2003, 49(4), 533-534. However, the ability to control information encoded in mass spectrometry with the use of mass tags has yet been underestimated. Under the term "mass tags" it is referred to compounds giving characteristic peaks in a mass spectrum obtained by mass spectrometry. The amount of information can be encoded in mass spectrum is enormous and large compared with other physical methods because current mass spectrometers can detect peaks up to dozens of thousands of Daltons with resolution better than one ppm which theoretically corresponds to millions of bites of information. In theory, each bit can be encoded with particle mass tags added (or not added) to sample subject to a mass spectrometry analysis. In practice, most mass tags have multiple peaks because of isotopic distribution while limits high resolution offered by current mass spectrometers. However, information entropy of mass spectrometers still exceeds other physical methods by order of magnitude.

In research applications, multiplex uses of mass tags have been shown. For example, in Zhu, Zh.-J., et al., J. Am. Chem. Soc 2008, 130 (43) 14139-14143, the cellular uptake of nanoparticles containing different mass tags has been studied. Furthermore, DNA-liposome conjugates have been described as well as mass tags used for 64-plex-mass tag PCR, see Briese, T. et al., Emery Infect Dis., 2005, 11 (2) 310-313.

Mass spectrometry imaging has been used for the reading of information printed with mass tags inks made of nanoparticles containing attached ionized molecules of variable mass, see Creran, B.; et al., Chem. Commun., 2012, 48(38), 4543-4545. The type of detection described therein is based on macroscopic properties of the label, that is, the label shape which can be detected by mass spectrometry imaging, and, thus, can be considered similar to watermarks.

In addition, mass spectrometry based methods have been used in other fields of security labeling, however, these methods rely on the properties of the components naturally occurring in the object to be analyzed or they did not make use of multiple mass tags allowing to allocate an information about said object.

Furthermore, variation of isotopic compositions can be used for the identification of counterfeit drugs and chemicals. Typically, mass spectrometry represents the most straightforward method to determine isotope ratios in a molecule, thus, is the method of choice for isotopic distribution analysis. Artificial addition of isotopically substituted analogues has been proposed as anti counterfeit measure for drugs, see EP 1 677 105. Another approach employs monitoring of isotopic distribution at various sites of a complex molecule, US 6,815,213. In complex molecules, isotopic distributions at various sites are dependent on method of synthesis in the starting compounds. Studies of these distributions allow for identification of counterfeit materials obtained by illicit chemical synthesis.

Identity and purity of recombinant proteins has been assessed using mass spectrometry labels. The proposed method included labeling of protein samples under investigation with isobaric mass tags, and their comparison using tandem mass spectrometry. This method did not imply addition of mass tags to the protein during manufacture or encoding of the information and mass tags have been only used as a tool for comparison of different examples.

Today mass spectrometry represents a simple and affordable method because of developing technology for mass spectrometers, thus, opening new horizons for security applications of mass spectrometry. For example, ambient-pressure ionization techniques which do not require use of vacuum allow for designing of instruments capable of in-field operation. Recently, Eberlin, L.S.; et al., Analyst, 2010, 135(10), 2453-2744 describe the use of mass spectrometry at ambient pressure for distinguishing counterfeit self printed banknotes by DESY (Desorption Electrosprayionization) and EASI (Easy Ambient Sonic Spray Ionization). It is described therein, that mass spectra collected from different banknotes featured unique profiles because different papers, dyes and printing technologies have been used.

Although many security applications of mass spectrometry have been described in the art, no method is described using mass spectrometry for allocating an information about the object by way of mass tags allowing labeling of surfaces or substances. Hence, there is a need for methods allowing allocating an information about an object as well as a method for labeling an object for example, there is a need for a method for tracking or identifying an object having a predetermined information. Another goal of the present application is to provide a kit for allocating an information or labeling an object of a tracking or identifying object containing a information.

### Summary of the present invention

The present invention aims in providing new methods for security labeling of products. In particular, the present inventors provides a method for allocating an information about an object whereby said information is a binary code and said binary code is present in said object based on a set of compounds having specific peaks in a mass spectrum obtained by a mass spectrometry analysis of said set of compounds.

Hence, in a first aspect, the present invention relates to a method for allocating an information about an object, comprising the steps of
- converting an information about an object into a binary code;
- providing a set of compounds which are distinguishable in a mass spectrum due to distinct specific peaks whereby the number of compounds are identical with the number of bits of the binary code;
- assigning a binary code to a set of compounds having specific peaks in a mass spectrum obtained by a mass spectrometry analysis of said set of compounds.
In another aspect, the present invention relates to a method labeling an object comprising the steps of
- optionally, allocating an information according to claim 1,
- providing a mixture of compounds representing the bits of a binary code assigned based upon the step of allocating an information according to claim 1, and
- labeling the object with said mixture of compounds representative for a binary code of a converted information.

Moreover, another aspect of the present invention relates to a method for tracking or identifying an object containing a predetermined information comprising the steps of
- detecting the presence or absence of a set of predetermined compounds in and/or on said object by mass spectrometry;
- assigning the distinct specific peaks of said set of compounds in the mass spectrum to a pre-determined binary code based on the absence or presence of said peaks of the set of predetermined compounds;
- comparing and/or converting the binary code into the information for tracking and identifying the product based on said predetermined information.

In addition, the present invention provides a method for providing a security feature to an object comprising the step of allocating a predetermined information according to the method described herein and labeling the object according to the method as described herein. Thus, it is possible to provide a security feature, namely, an information converted in a binary code using a set of compounds which are distinguishable in a mass spectrum due to distinct specific peaks present in the mass spectrum.

Finally, the present invention relates to a kit for allocating an information or labeling an object for tracking or identifying an object containing information comprising a predetermined set of compounds which are distinguishable in mass spectrum due to the specific peaks present in the mass spectrum as well as for use of a set of compounds for allocating information or labeling an object of tracking or identifying an object containing information whereby said set of compounds are distinguishable in a mass spectrum and whereby the presence of absence of a compound represents a bit of a binary code.

### Brief description of the drawings

### Detailed description of the present invention

The present application relates to a method for allocating an information about an object, comprising the steps of
- converting an information about an object into a binary code;
- providing a set of compounds which are distinguishable in a mass spectrum due to distinct specific peaks whereby the number of compounds are identical with the number of bits of the binary code;
- assigning a binary code to a set of compounds having specific peaks in a mass spectrum obtained by a mass spectrometry analysis of said set of compounds.

That is, according to the present invention, information for the labeling is converted into a binary form. The binary data or binary code which is used herein interchangeably, is represented as a sequence of two-state bits whereby a bit being 0 or 1.

The method according to the present invention includes the step of providing a set of compounds which have distinguishable peaks in a mass spectrum. Details of said compounds are given below. The number in compounds of said set of compounds is identical with the number of bits of the binary code containing the information about an object. The method according to the present invention includes the step of assigning the binary code to a set of compounds having specific peaks in a mass spectrum obtained by mass spectrometry analysis of said set of compounds. That is, the set of compounds according to the present invention represents a set of mass tags being required to create a chemical representation of the label which can be added to substance.

As used herein, the term "mass tag" refers to a compound giving rise to a detectable signal in mass spectrometry. That is, each compound of the set of compounds according to the present invention represents a single mass tag and the set of compounds represents a set of mass tags representing a set of peaks when analyzed by mass spectrometry. Each mass tag has its characteristic peak in mass spectrometry. Further, all mass tags in the set according to the present invention must be distinguishable from each other by their mass spectra. As described herein, the exemplary organic trityl derivatives bear various substituents, thus, the trityl derivatives in form of its trityl cations generated by ionizations have different m/z ratios in a mass spectra.

The compounds present in the set of compounds representing the mass tag in the set of mass tags are selected in a way that provides a detectable signal in mass spectrometry. In addition, the compounds are selected in a way that each compound in the set of compounds has a distinct specific peak distinguishable from any other compound of said set of compounds and, in addition, is distinguishable from other ingredients of the object. That is, the mass tag creating the chemical representation of the label are selected to provide a detectable signal in mass spectrometry. Mostly, compounds provides signal of high intensity and low concentrations to decrease the concentration of the mass tag to be used for providing readable signals.

With respect to the term "binary code" as used herein, said term refers to binary data represented by the two state bits where each bit being 0 or 1. That is, the binary code is a binary data composed of a number of bits whereby each bit is 0 or 1. The number of bits of the binary code or binary data is identical with the number of compounds in the set of compounds provided. Thus, the presence or absence of each of the compounds of the set of the compounds represents a bit whereby the presence of the compound may represent the bit being 1 while the absence of said compound represents a bit being 0. Of course, the absence may represent a bit being 1 while the absence of said bit being 0 depending on the assignment done before.

That is, each mass tag, i.e. each compound of the set of compounds, represents one bit of information whereby the presence of the particular mass tag in a sample or its absence encodes one bit of information.

In an alternative way, the variation of mass tag signal level above or below certain threshold may be used to provide an alternative for encoding with multiple bits per mass tag. The mapping of mass tags onto bit sequences is arbitrary. Little-Endian (highest mass encodes most significant bit) or big-Endian (highest mass encodes at least a significant bit) can be used, as well as all other variations of mapping.

Based on the binary code, the set of compounds is mixed. That is, in case of a binary code of 11001, the mix of the set of compounds comprises compounds 1, 2 and 5 whereby the presence of the compounds represent a bit being 1 while compounds 3 and 4 when representing a bit being 0 are absence from said mixture.

Hence, a binary code for an information can be provided easily to a desired object.

The information converted into the binary code may be any information about the object. For example, in case of pharmaceutical products, the information may be information on the manufacture, the place of manufacture or specific ingredients etc. Typically, the information represents a security feature allowing to identify counterfeits.

The binary code may be a binary code of any length, for example, the binary code is composed of at least two, three, four, five, six, seven or eight bits. In case of a binary code composed of eight bits, a set of compounds consisting of eight compounds being distinguishable in mass spectrometry, is provided.

The binary code may not only relate to the specific information but may also contain other features, like a hash sum of the binary code, etc.

The mass tags or compounds of the set of compounds useful for labeling comprise different kinds of compounds. For example, the set of compounds are organic cations or its precursors. In one embodiment, the set of compounds is selected in advance in a way that the mass of said compounds are otherwise not present in the object, thus, allow to obtain distinct peaks at low concentrations.

In another embodiment, the mass tag can be a trityl derivative as described above and as exemplified in the examples. Depending on the application, the mass tags may be selected in a way not to be harmful or toxic and being allowable under admittance practice, for example for pharmaceuticals.

In another aspect, the present invention relates to a method for labeling an object comprising the steps of
- optionally, allocating an information according to the method according to the present invention as described above,
- providing a mixture of compounds representing the bits of a binary code assigned based upon the step of allocating an information as described above, and
- labeling the object with said mixture of compounds representative for a binary code of a converted information.

That is, in a first step the mixture of compounds representing the bits of a binary code assigned based on the step of allocating an information to a binary code is performed and, thereafter, the object to be labeled is labeled with said mixture of compounds representing the binary code of a converted information.

Thus, it is possible to label individually the object with a hidden information in form of the specific mixture of the compounds representing the binary code. For example, this method allows easy labeling of an object with a security feature, like a security code against counterfeiting. Furthermore, only traces of the compounds are required for labelling due to the high sensitivity of mass spectrometry.

As used herein, the term "object" refers to any item. These item include pharmaceutical or cosmetic items as well as perfumes. Furthermore, the term object includes printed documents or banknotes as well as paper or cardboards.

Labeling may occur within the object or on the surface of the object. For example, in case of pharmaceuticals, cosmetics or perfumes, the set of compounds may be mixed e.g. homogeneously mixed, with the pharmaceutical, cosmetic or perfume. That is, the mixture of compounds can be introduced into and or introduced onto the object. In case of bringing it onto the object, the labeling may occur on the surface or in surface layers of the object. For example, in case of banknotes or documents, the label may be printed or otherwise brought onto the surface of the object.

In case of homogeneous distribution of the compounds (mass tags) in the object, the complete encoded information can be recovered from any small fraction of the object.

When bringing the compounds onto the surface of the object, the compounds may be immobilized by known methods for fixed attachment to the surface avoiding washing away off surface. Information applied to documents can contain data rated to information otherwise readable (printed), and can be used as a covered watermark of the document. Unlike a watermark, it can be applied so that every small piece of the object contains the entire label. Hash sum of printable information can be used as covered, mass spectrometry detectable, digital signatory on printed document. Application of this hash sum in the form of a mass tag mixture to all pages of documents prevents third a party from all kinds of document modification including page inserts even if full set of mass tags is available to third party, provide that hashing algorithm is unknown to third party.

That is, the information encoded with mass tags can consist of encrypted binary data including the hash sum. The hash sum may be calculated from intrinsic physical or chemical properties of the object being labeled. For example, the hash sum may be calculated from selected points of process NIR absorbance spectrum, refraction data, or other physical or chemical data. This provides a digital signal of the compound batch. Addition of any components to this mixture will change physical properties used for the calculation of hash sum will invalidate digital signature. If the algorithm of its calculation is only known to parties during labeling and checking, it is not possible for a third party to modify chemical composition in between and provide correct hash sum even if full set of mass tags is available to a third party.

In another aspect, the present invention relates to a method for tracking or identifying an object containing a predetermined information comprising the steps of
- detecting the presence or absence of a set of predetermined compounds in and/or on said object by mass spectrometry;
- assigning the distinct specific peaks of said set of compounds in the mass spectrum to a pre-determined binary code based on the absence or presence of said peaks of the set of predetermined compounds;
- comparing and/or converting the binary code into the information for tracking and identifying the product based on said predetermined information.

The method includes the step of detecting the presence or absence of the mass tags, i.e. the set of predetermined compounds in the object to be analyzed by mass spectrometry. The peaks of the presence or absence of the peaks corresponding to the predetermined compounds allow to assign the same to the binary code. The binary code may then be compared or converted into the information for tracking and identifying the product based on said predetermined information.

As demonstrated in the examples, the mass spectrometry allows differentiation of compounds based on single CH₂ groups. Hence, the set of compounds can be produced easily and in large scales.

### Brief description of the drawings

Figure 1 : Mass spectrum of a mixture of mass tags 7a-h representing 0xFF hexadecimal value.
Figure 2: Mass spectrum of a mixture of mass tags 7b, 7h representing character 'A'.
Figure 3: Mass spectrum of a mixture of mass tags **7b, 7g** representing character 'B'
Figure 4: Mass spectrum of a mixture of mass tags **7b, 7h, 7g** representing character 'C'
Figure 5: Mass spectrum of a mixture of mass tags **7b, 7c, 7e** representing character 'h'
Figure 6: Mass spectrum of a mixture of mass tags **7b, 7e, 7h** representing character 'l'
Figure 7: Mass spectrum of a mixture of mass tags **7b, 7e, 7g** representing character 'J'
Figure 8: Mass spectrum of a mixture of mass tags **7b, 7d, 7g, 7h** representing character 'S'

The present invention will be described further by way of examples without limiting the present invention thereto.

### Example 1. Synthesis of mass tags for binary encoding of one byte of information

In order to demonstrate encoding of information in mass spectrum, a set of eight highly ionizable trityl compounds has been synthesized, each giving rise to a distinct signal in mass spectrum. This set is enough for the encoding of one byte of binary information. Compounds have been prepared from common starting precursor **1** which has been described before. Mass tags **7a-h** contain azido groups for the optional attachment to biomolecules and surfaces.

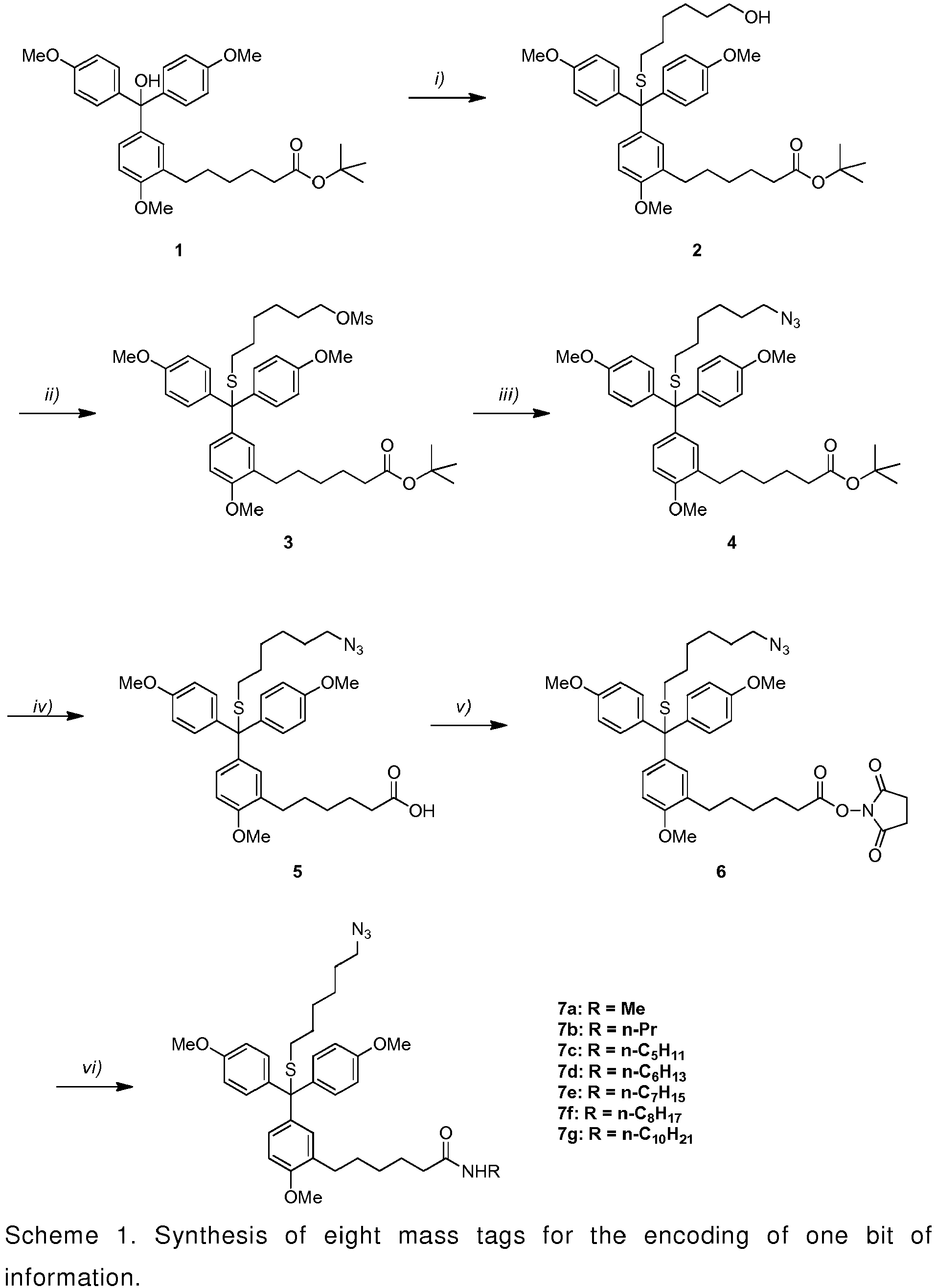

**6-{3-[5-(*tert*-butyloxycarbony)penty)]-4',4",4'''-trimethoxytritylthio}hexan-1-ol (2).** To a stirring solution of 3-[5-(*tert*-butyloxycarbonyl)pentyl]-4',4",4'''-trimethoxytritanol **1** (1.46 g; 2.8 mmol) and 6-mercaptohexan-1-ol (413 mg; 3.1 mmol) in dry DCM (30 ml) glacial acetic acid (3 ml) was added. Mixture was stirred at ambient temperature overnight. The reaction was monitored by TLC (PhMe:EtOAc, 7:1 +1% NEt₃). DCM (100 ml) was added to the mixture. The obtained solution was washed by saturated solution of NaHCO₃ (3×100 ml), organic layer was dried by Na₂SO₄ and the solvent was evaporated under reduced pressure. The residue was chromatographed on silica gel (PhMe:EtOAc, 10:1 + 1% NEt₃). The product was obtained as viscous yellowish oil (1.41 g), yield 80 %. R_{f} = 0.26 (PhMe:EtOAc, 7:1 + 1% NEt₃). ¹H-NMR (DMSO-*d*₆): 1.09-1.22 (m, 6H), 1.22-1.35 (m, 4H), 1.37 (s, 9H), 1.39-1.52 (m, 4H), 2.04-2.17 (m, 4H), 2.42-2.53 (m, 2H), 3.27-3.38 (m, 2H), 3.73 (s, 6H), 3.75 (s, 3H), 4.25-4.31 (m, 1 H), 6.8-6.9 (m, 5H), 6.98-7.04 (m, 1 H), 7.05-7.1 (m, 1H), 7.17-7.22 (4H). ¹³C-NMR (DMSO-*d*₆): 20.36, 25.02, 27.67, 27.90, 28.22, 28.31, 28.77, 29.44, 31.37, 32.25, 34.66, 54.95, 55.20, 60.54, 79.21, 109.59, 112.98, 125.23, 127.51, 128.11, 128.82, 130.03, 130.54, 136.51, 137.31, 157.46.

**6-{3-[5-(*tert*-butyloxycarbonyl)penty)]-4',4",4'''-trimethoxytritylthio}hexy)-1-methanesulfonate (3).** To a stirring solution of 6-{3-[5-(*tert-*butyloxycarbonyl)pentyl]-4',4",4'''-trimethoxytritylthio}hexan-1-ol **2** (1.30 g; 2 mmol) and methanesulfonyl chloride (467 mg; 4 mmol) in dry DCM (20 ml) triethylamine (362 uL; 2.6 mmol) was added. The reaction was monitored by TLC (PhMe:EtOAc, 7:1 + 1% NEt₃). After the consumption of all starting material the reaction mixture was diluted with DCM (80 ml) and washed with saturated solution of NaCl (2×100 ml) and water (2×100 ml). Organic layer was dried over Na₂SO₄ and evaporated. The product was obtained as viscous yellow oil which was used without purification. Yield 1.41 g (99%). R_{f} = 0.50 (PhMe:EtOAc, 7:1 + 1% NEt₃).

**6-13-[5-(*tert*-butyloxycarbonyl)pentyl]-4',4",4'''-trimethoxytritylthiolhexyl-1-azide (4).** To a stirring solution of 6-{3-[5-(*tert*-butyloxycarbonyl)pentyl]-4',4",4'''-trimethoxytritylthio}-1-methylsulfonylhexane **3** (1.41 g; 2 mmol) in DMSO (15 ml) sodium azide (650 mg; 10 mmol) was added. The reaction was monitored by TLC (PhMe:EtOAc, 7:1 + 1% NEt₃). After the consumption of all starting material the reaction mixture was diluted with EtOAc (100 ml) and washed with distilled water (4×75 ml). Organic layer was dried over Na₂SO₄ and solvent was evaporated. The product was purified by column chromatography on silica gel (PhMe:EtOAc, 15:1 + 1% NEt₃). It was obtained as viscous yellowish oil (1.1 g), yield 90 %. R_{f} = 0.85 (PhMe:EtOAc, 10:1 + 1% NEₜ3).

**6-[3-(5-carboxypentyl)-4,4',4"-trimethoxytritylthio]hexyl-1-azide (5).** Tetrabutylammonium hydroxide (20 mL, 40% in water) has been added to a stirring solution of compound **4** (1.1 g; 1.8 mmol) in DMSO (20 mL). The reaction was monitored by TLC (7:1 PhMe:EtOAc + 1% Et₃N). After the consumption of all starting material the crystalline citric acid was added until emulsion had been formed. The mixture was extracted twice with EtOAc (50 mL), combined organic layers were washed with water (4 × 70 mL), dried over sodium sulfate, and evaporated to give crude compound which has been used without further purification. Yield 617 mg (90 %), viscous yellowish oil. R_{f} 0.1 (7:1 PhMe:EtOAc + 1% Et₃N). ¹H NMR (DMSO-*d₆*): 0.96 (t, J = 7.33 Hz, 3H), 1.08 - 1.54 (m, 11 H), 2.05 - 2.20 (m, 4H), 3.17 - 3.30 (m, 2H), 3.73 (s, 6H), 3.75 (s, 3H), 3.94 - 4.10 (q, 2H), 6.76 - 6.93 (m, 5H), 6.97 - 7.05 (m, 1 H), 7.08 (s, 1 H), 7.14 - 7.26 (m, 4H). ¹³C NMR (DMSO-*d₆*): 11.21, 14.03, 20.70, 24.39, 25.62, 27.86, 27.98, 28.06, 28.20, 28.95, 29.49, 31.28, 33.80, 45.56, 50.51, 54.97, 55.23, 59.70, 64.64, 109.63, 113.03, 127.55, 128.95, 130.05, 130.60, 136.51, 137.32, 155.38, 157.51, 174.46.

**6-[3-(5-(N-succinimidyloxy)carbonylpentyl-4,4',4"-trimethoxytritylthio]hexyl-1-azide (6).** Crude carboxylic acid **5** (1.8 g; 2.9 mmol) was dissolved in a mixture of dichloromethane (50 mL) and acetonitrile (10 mL). Disuccinimidyl carbonate (1.04 g; 4.06 mmol) and triethylamine (565 uL; 4.06 mmol) were added. Reaction was monitored by TLC (1:1 PhMe : Me₂CO + 1% Et₃N). After 1 h at room temperature TLC showed complete transformation of the starting compound. Dichloromethane (50 mL) was then added, and mixture was washed with saturated NaHCO₃ (2 × 50 mL) and then with water (3 × 100 mL). Organic layer was separated, dried over sodium sulfate, and evaporated. The residue was subjected to column chromatography (7:1 PhMe : EtOAc + 1% Et₃N) to give rise to 1.5 g (75%) of title compound as colorless oil. R_{f} 0.33 (PhMe:EtOAc, 7:1 + 1% NEt₃). ¹H NMR (DMSO-*d₆*): 1.09-1.22 (m, 4H), 1.25-1.35 (m, 4H), 1.36-1.5 (m, 4H), 1.53-1.64 (m, 2H), 2.05-2.11 (m, 2H), 2.43-2.5 (m, 2H), 2.56-2.62 (m, 2H), 2.79 (s, 4H), 3.2-3.26 (m, 2H), 3.72 (s, 6H), 3.74 (s, 3H), 6.81-6.88 (m, 5H), 6.99-7.03 (m, 1 H), 7.05-7.09 (m, 1H), 7.16-7.21 (m, 4H). ¹³C NMR (DMSO-*d₆*): 24.41, 25.78, 25.99, 28.03, 28.25, 28.35, 28.43, 29.10, 29.75, 30.49, 31.64, 50.86, 55.35, 55.62, 65.01, 110.02, 113.4, 127.96, 128.53, 129.24, 130.46, 130.90, 136.95, 137.66, 155.74, 157.86, 169.21, 170.53.

**6-[3-(5-alkylaminocarbonylpentyl)-4,4',4"-trimethoxytritylthio]hexyl-1-azides (7a-g).** Compound **6** (20 mg) was dissolved in acetonitrile (1 ml) in a 1.5 mL plastic vial. To the eight aliquots (50 uL) of obtained stock solution of compound **6** amines (2 uL each) were added: 40% solution of methylamine in water for **7a,** propylamine for **7b,** butylamine for **7c,** amylamine for **7d,** hexylamine for **7e,** heptylamine for **7f,** octylamine for **7g,** decylamine for **7h).** Then each of the solutions was diluted to 1 ml with acetonitrile. The obtained mixtures were vortexed for 1 h at ambient temperature using an orbital shaker. After centrifuging, supernatants were separated to give stock solutions of compounds **7a-g** for mass spectrometry encoding experiments.

### Example 2. Simultaneous mass spectrometry detection of mass tags in equimolar mixture

Stock solutions from each reaction were mixed in one plastic vial, and acetonitrile (920 uL) was added. Resulting solution (0.5 uL) was applied to MALDI target plate, and analyzed using Bruker Ultraflex III MALDI-TOF mass spectrometer. Resulting mass spectrum represents one byte of information with all bits sets to one.

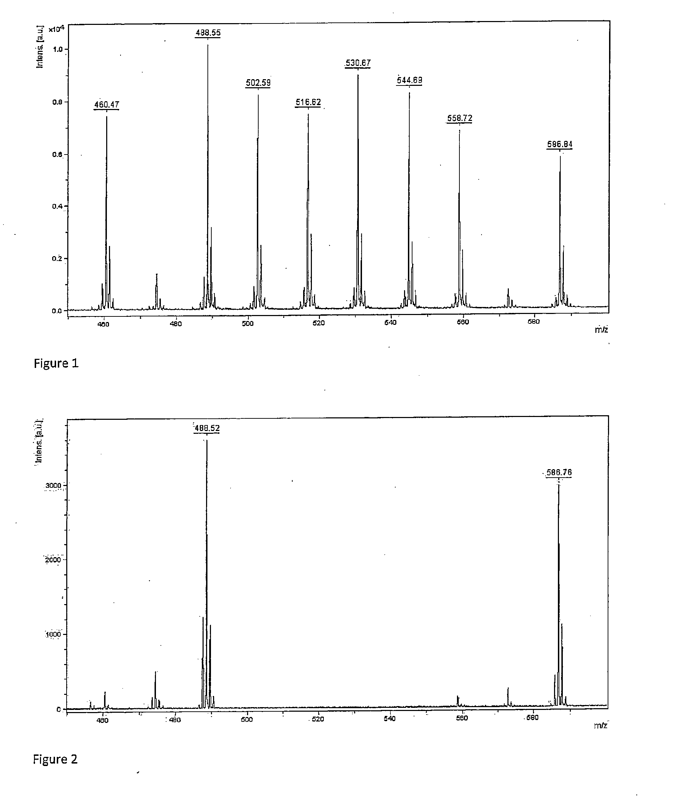

Compounds **7a-h** are ionized to form trityl cations which appear as distinct peaks in mass spectrum (Fig. 1, Table 1).

**Table 1. Distinct peaks from mass tags 7a-h.**

| **Compound** | **Calculated cation m/z, monoisotopic peak** | **Observed cation m/z, monoisotopic peak** |
|---|---|---|
| **7a** | 460.25 | 460.47 |
| **7b** | 488.28 | 488.55 |
| **7c** | 502.30 | 502.59 |
| **7d** | 516.31 | 516.62 |
| **7e** | 530.33 | 530.67 |
| **7f** | 544.34 | 544.69 |
| **7g** | 558.36 | 558.72 |
| **7h** | 586.39 | 586.84 |

### Example 3. Encoding of arbitrary ASCII bytes with mass tags 7a-h.

In order to demonstrate encoding of arbitrary information in mass spectrum, we used mixtures of mass tags **7a-h** to encode **ASCII** characters.

Big endian encoding has been arbitrarily chosen for experiments (small masses were used to encode most significant bytes). A set of arbitrarily chosen Latin 1 charset characters were encoded using standard **ASCII** table (Table 2).

**Table 2. Encodina of ASCII table characters bv mass spectrometry**

| ASCII Latin 1 character | Decimal / Hex value | Binary value | Compounds in encoding mixture | Figure |
|---|---|---|---|---|
| 'A' | 65/0x41 | 01000001 | 7b, 7h | 2 |
| 'B' | 66 / 0x42 | 01000001 | 7b, 7g | 3 |
| 'C' | 67 / 0x43 | 01000011 | 7b, 7h, 7g | 4 |
| 'h' | 104 / 0x68 | 01101000 | 7b, 7c, 7e | 5 |
| 'I' | 73 / 0x49 | 01001001 | 7b, 7e, 7h | 6 |
| 'J' | 74 / 0x4A | 01001010 | 7b, 7e, 7g | 7 |
| 'S' | 83 / 0x53 | 01010011 | 7b, 7d, 7g, 7h | 8 |
| <non printable> | 255 / 0xFF | 11111111 | 7a, 7b, 7c, 7d, 7e, 7f, 7g, 7h | 1 |

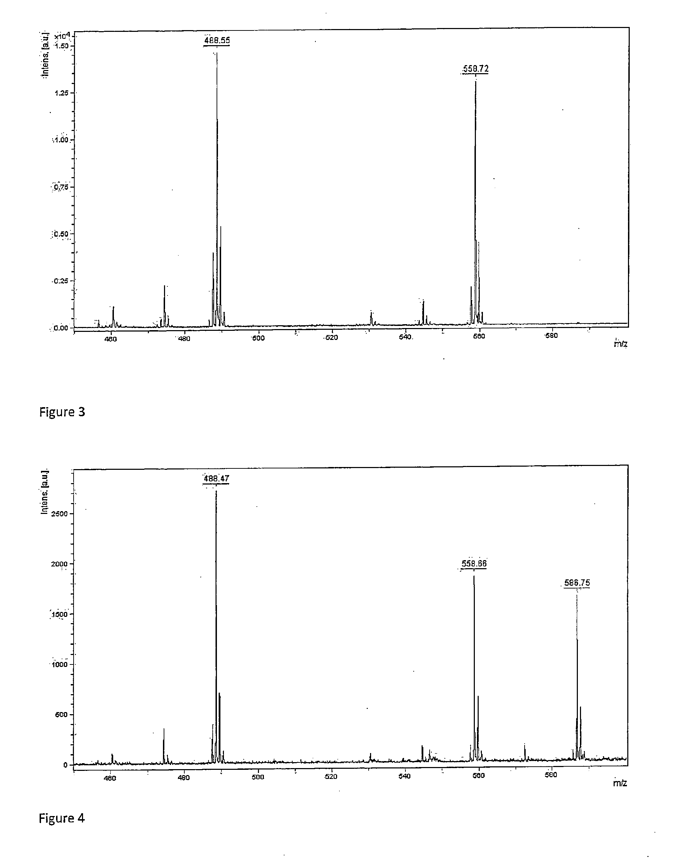

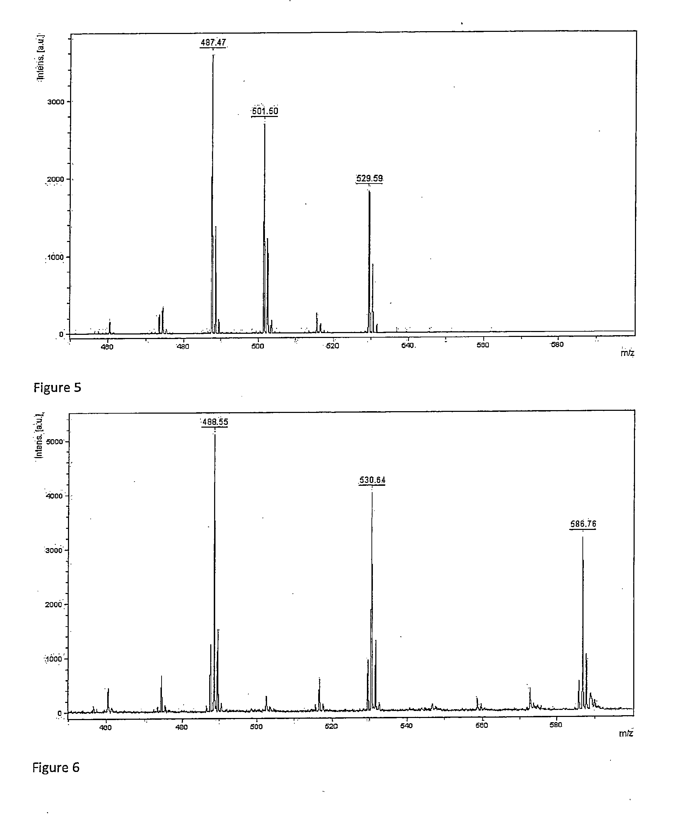

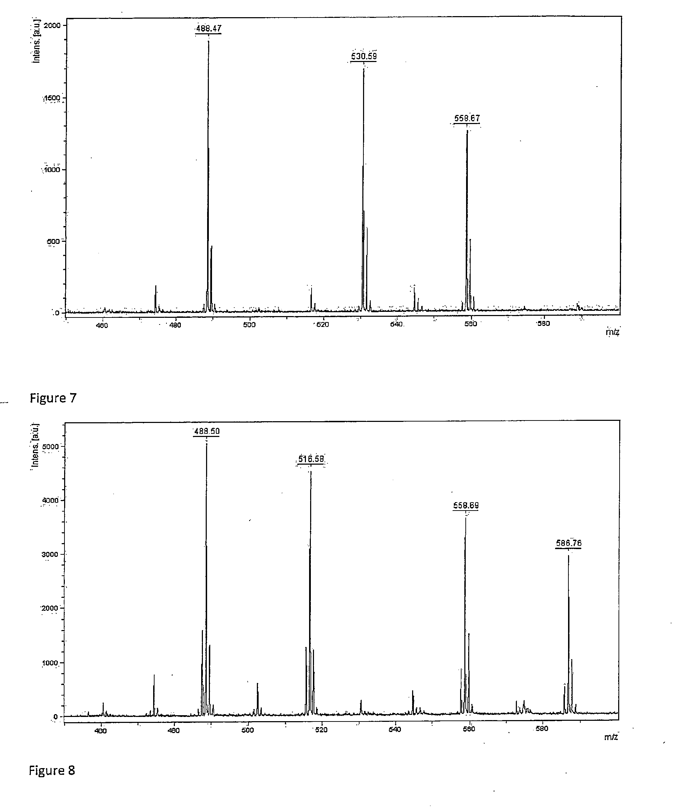

Samples were prepared by mixing solutions of compounds selected from **7a-h** (10 uL each) and adding acetonitrile (to 1 mL). Aliquots (0.5 uL) of obtained solutions were taken and applied to MALDI target plate, and analyzed using Bruker Ultraflex III MALDI-TOF mass spectrometer (Fig. 2-8).

## Claims

1. A method for allocating an information about an object, comprising the steps of
- converting an information about an object into a binary code;
- providing a set of compounds which are distinguishable in a mass spectrum due to distinct specific peaks whereby the number of compounds are identical with the number of bits of the binary code;
- assigning a binary code to a set of compounds having specific peaks in a mass spectrum obtained by a mass spectrometry analysis of said set of compounds.

2. A method for labeling an object comprising the steps of
- optionally, allocating an information according to claim 1,
- providing a mixture of compounds representing the bits of a binary code assigned based upon the step of allocating an information according to claim 1, and
- labeling the object with said mixture of compounds representative for a binary code of a converted information.

3. A method for tracking or identifying an object containing a predetermined information comprising the steps of
- detecting the presence or absence of a set of predetermined compounds in and/or on said object by mass spectrometry;
- assigning the distinct specific peaks of said set of compounds in the mass spectrum to a pre-determined binary code based on the absence or presence of said peaks of the set of predetermined compounds;
- comparing and/or converting the binary code into the information for tracking and identifying the product based on said predetermined information.

4. The method according to any one of the claims 2 or 3 wherein the mixture of compounds is introduced into and/or onto the object.

5. The method according to any one of claims 2 to 4 wherein the object is a pharmaceutical product, a chemical product, a perfume component.

6. A method according to any one of claims 1 to 5 wherein the information contains or is a hash sum.

7. The method according to any one of claims 1 to 6 wherein the set compounds are organic cations or its precursors.

8. A method according to any one of claims 1 to 7 wherein the set of compounds are selected that the mass of said compounds are otherwise not present in the object.

9. The method according to any one of claims 1 to 8 whereby the information is calculated from intrinsic chemical, physical or spectral properties of the object.

10. A method according to anyone of claims 1 to 9 wherein the presence of the compound correspond to 1 while the absence of said compounds correspond to 0 for representing a bit of the binary code.

11. The method according to anyone of claims 1 to 10 wherein the set of compounds are present on the surface of the object.

12. The method according to claim 11 whereby the surface is paper or cardboard, a printed document or banknote.

13. The method according to any one of claims 2 to 12 whereby said compounds are bound covalently to the surface of the object.

14. A method for providing a security feature to an object, comprising the steps of
- allocating a predetermined information according to the method of claim 1; and
- labeling the object according to the method of claim 2.

15. A kit for allocating an information or labeling an object, or for tracking or identifying an object containing an information comprising a predetermined set of compounds which are distinguishable in a mass spectrum due to distinct specific peaks present in the mass spectrum, in particular, for use in a method according to any one of claims 1 to 14.

16. A use of a set of compounds for allocating an information, or labeling a object, or for tracking or identifying an object containing an information, **characterized in that** the set of compounds are distinguishable in a mass spectrum and whereby the presence or absence of a compound represents a bit of a binary code.
